# EUROPEAN PATENT SPECIFICATION

(11) **EP 0 939 722 B1**
(45) Date of publication and mention of the grant of the patent: **10.04.2002**
(21) Application number: 97946207.4
(22) Date of filing: 21.11.1997
(51) Int. Cl.: B62D 21/15

(54) **FRONTAL STRUCTURE IN A VEHICLE**
FAHRZEUGWAGENVORDERBAU
STRUCTURE FRONTALE DANS UN VEHICULE

(30) Priority: 21.11.1996 SE 9604274
(43) Date of publication of application: 08.09.1999
(73) Proprietor: Volvo Car Corporation, 405 31 Göteborg (SE)
(72) Inventor: LARSSON, Johnny, K., S-411 28 Gothenburg (SE); JERNSTRÖM, Clas, S-436 45 Askim (SE)
(74) Representative: Hellbom, Lars Olof
(86) International application number: SE9701961
(87) International publication number: WO9822328

(56) References cited:
- EP-A- 0 278 912
- EP-A- 0 788 930
- US-A- 4 050 537

## Description

The present invention relates to a frontal structure in a vehicle, comprising a pair of laterally spaced beams, each comprising a sheet metal box element having greater length than both width and height, and having a portion which is oriented in the longitudinal direction of the vehicle, as well as means for sensing the retardation of the vehicle during a collision and, as a function thereof, changing the rigidity of the beam in its longitudinal direction.

Box beams are used in a number of different applications in automobiles, for example, as the front side members in passenger car chassis, and are thus components whose design crucially affects the crash safety of the vehicle. In attempting to achieve high crash safety, it has always been striven for, by a controlled crash sequence, to force as far as possible the elements in the structure to be deformed in the most energy-absorbing manner, which is progressive upsetting or crumpling. Less energy-absorbing reactions such as rotation, buckling or bending should thus be avoided.

Ideally, from a collision safety point of view, the volume represented by the front portion of the vehicle should consist of a large number of cells each of which having a large energy-absorbing capacity, regardless of from which direction the vehicle is struck, but such solutions have not been applicable in mass production for a number of reasons.

Test vehicles have been made using, in order to achieve a controlled deformation, box beams filled with foamed plastics. Such vehicles have, however, never been produced in large numbers. The reasons are many, but the most important are the high costs involved with complicated manufacturing processes and the environmental effect of toxic chemicals in the foam used.

Normally, the beam system in a vehicle is regarded as a passive security system where it is primarily the geometric shape of the box-shaped beams which, by virtue of their energy-absorbing capacity, determines the collision security. It is, however, known to arrange an "active" beam system in a vehicle, i.e. a system where a collision triggers an activity which makes the beam system perform in a manner exceeding its normal mechanical limits. Such an active beam arrangement is known, e.g. by US 4 050 537. Here, an explosive charge is used to change, in a collision, the cross section of a box beam in such a manner that its rigidity, and thus its energy-absorbing capacity, increases. The difficulty is, however, to achieve a controlled detonation in conjunction with the deformation caused by the collision, so that the result will actually be an increase in rigidity and energy-absorbing capacity and not damage to the beam by the detonation so that the result will be the opposite.

The purpose of the present invention is to achieve a frontal structure of the type described by way of introduction, but with an active beam system which eliminates the above mentioned risk and which also can be the basis of a frontal structure, the deformation and energy-absorbing capacity of which can be adapted to various collision situations.

This is achieved according to the invention by virtue of the fact that said means are arranged to suddenly reduce the rigidity of the beam in its longitudinal direction.

The invention creates an active frontal structure where technology which is known per se is used in an entirely new manner, built on the idea of dimensioning the beams for a certain collision situation requiring a certain rigidity and changing the rigidity of the beams for collision situations in which another rigidity is desirable.

The invention can with advantage be the basis of a frontal structure in which the course of the deformation and the energy-absorbing capacity of the beam element are different depending on whether it is a more or less symmetrical frontal collision or a so-called offset collision, i.e. a collision with a vehicle or object which strikes essentially to one side of the longitudinal center-plane of the vehicle.

In a preferred embodiment of the frontal structure according to the invention, the beams are each coordinated with an individual retardation sensor and a device for activating explosive charges fixed to the respective beam. A control unit is arranged during a collision to compare signals representing the retardation from each sensor with each other and send signals to the respective activation devices to trigger the explosive charges only if the difference is less than a predetermined lowest value.

The beams are dimensioned for offset collision, requiring great rigidity, since the entire, or most, deformation energy must be absorbed by only one of the beams. In a symmetrical frontal collision, the deformation energy is distributed between the beams, and the optimal energy absorption is obtained in this case by reducing the rigidity of the beams.

The beams in the frontal structure are thus active. By studying the deformation of a passive beam after a collision, it is possible to determine where the transition occurred between upsetting or crumple-fold-formation and buckling of the entire beam, for example. By actively softening the beam in this area, for example with the aid of small pyrotechnical charges, the buckling can be avoided and the crumple-fold-formation distance can thus be extended over the softened area to the area behind it, which can be more rigid.

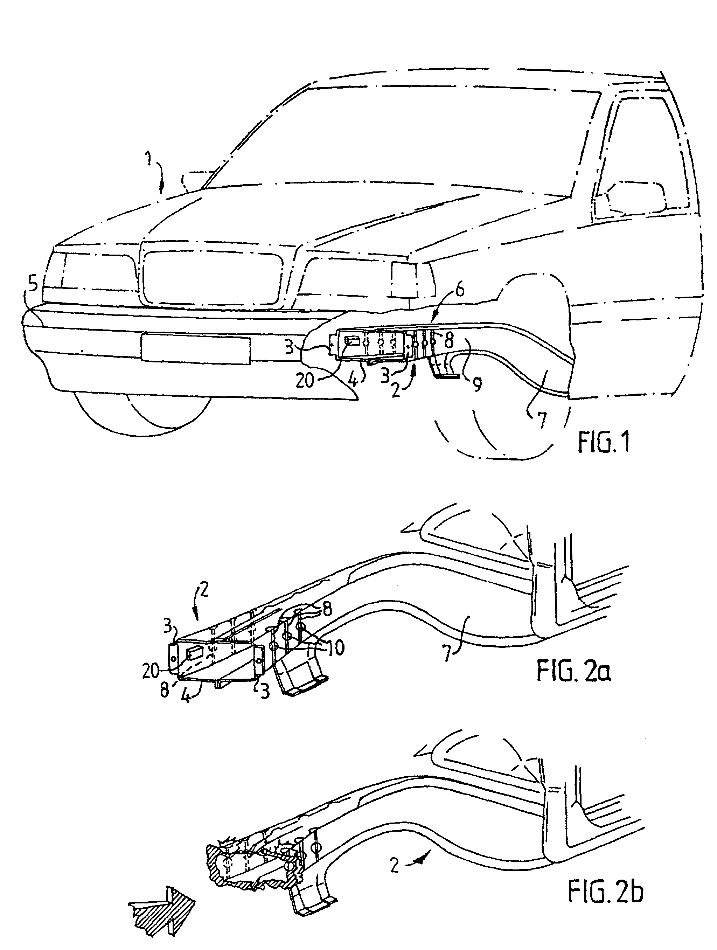

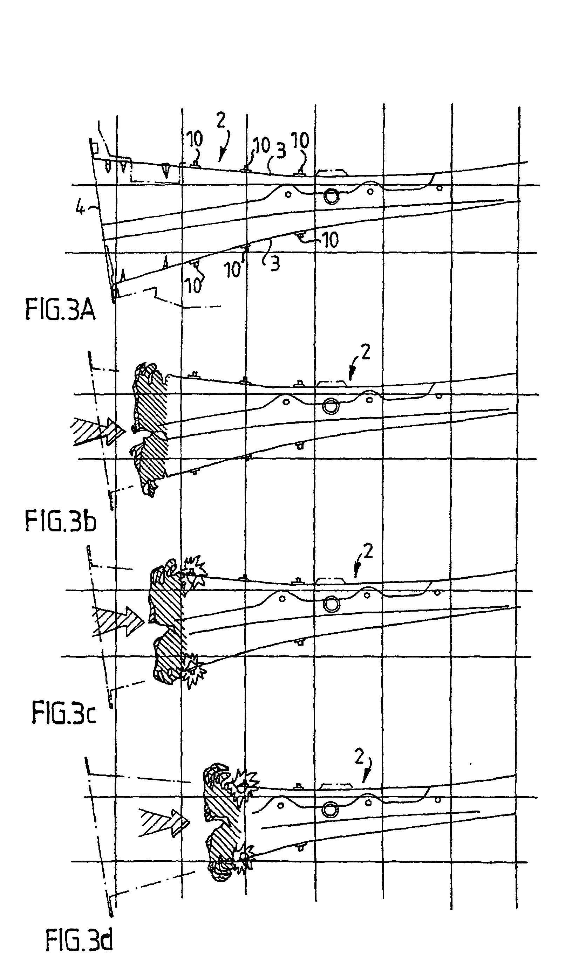

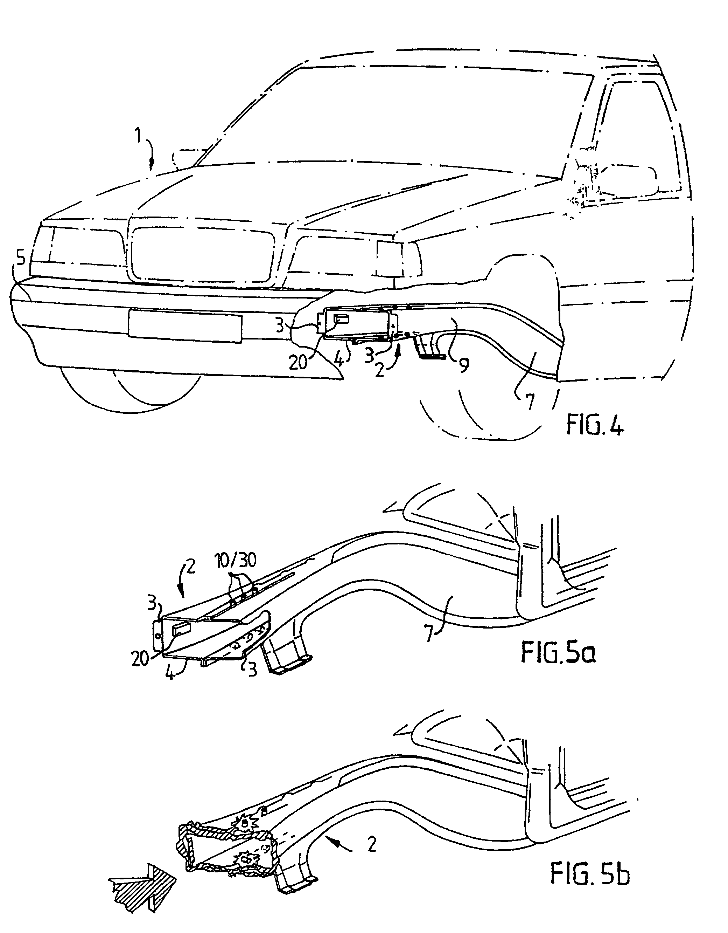

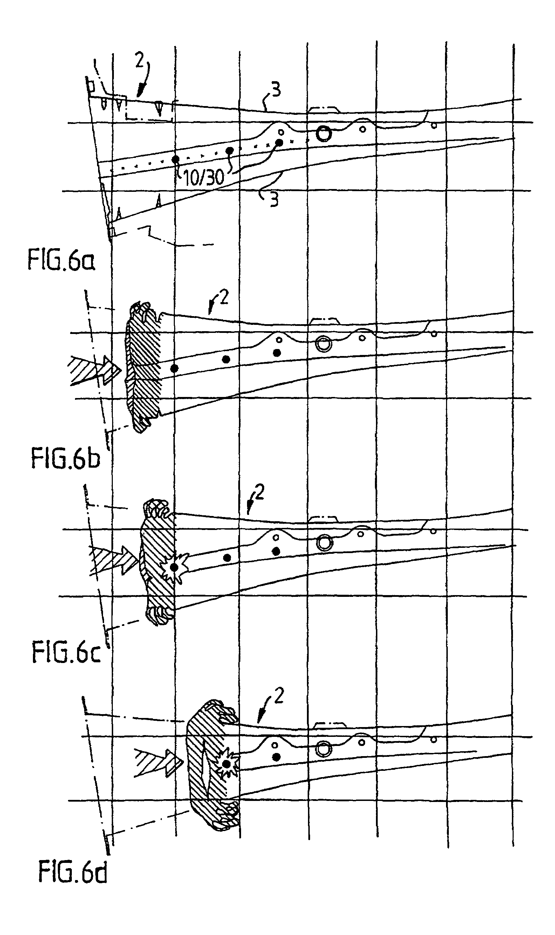

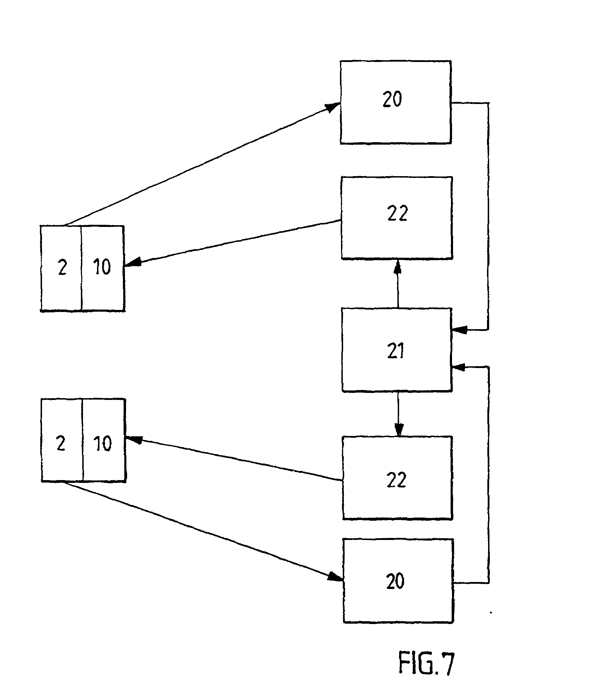

The invention will be described in more detail below with reference to examples shown in the accompanying drawings, where Fig. 1 shows a perspective view of a first embodiment of a frontal structure according to the invention of a schematically indicated passenger car; Figs. 2a and 2b show perspective views of the beam construction of the frontal structure prior to and after a certain deformation; Figs. 3a-3d are views from above of a portion of the beam in Fig. 2a in various states of deformation; Fig. 4 is a perspective view corresponding to Fig. 1 of a second embodiment; Figs. 5a and 5b are views corresponding to Figs. 2a,2b of the embodiment in Fig. 4; Figs. 6a-6d are views corresponding to Figs. 3a-3d of the embodiment in Fig. 4; and Fig. 7 is a block diagram of a control system for active deformation control.

In Figs. 1 and 4, 1 designates a vehicle body of so-called self-supporting type. A box beam, generally designated 2, is one of two side beam members fixed symmetrically relative to the longitudinal center-plane of the automobile. The beam 2 consists of two U-profiles 3, which are joined to each other by spot-welding to form a rectangular box profile. The beam shown, and its general construction and function are well known and need not be described in more detail here. It should suffice to say that in one car model available on the market, the lateral beams serve as supports for an intermediate frame, which in turn supports the engine. As can be seen in the Figures, the beam is tapered to the shape of a horn. Its end 4 (to the left in the Figures) is joined to the front bumper 5 (Figs. 1 and 4). From its straight forward portion, which extends in the longitudinal direction of the vehicle, the beam curves into a curved rear portion 7, which is joined to the bottom plate of the vehicle.

Each beam 2 in the embodiment shown in Figs. 1-3, has stamped indentations 8 in the facing vertical beam sides 9. Small explosive charges 10 are fixed in the indentations. The indentations 8 with the explosive charges 10 are arranged in a section which must be temporarily prevented from buckling and the beams are dimensioned here to support the structure in front of it so that it is exploited effectively for energy absorption by optimizing the upsetting or crumple-fold-formation process. When the deformation reaches the portion with the explosive charges 10, these are activated sequentially to weaken the beams and prevent them from buckling so that the upsetting or crumple-fold-formation sequence and the energy absorption can continue in the beam portion therebehind.

A retardation sensor in the form of an accelerometer 20 is mounted at the front end of each beam 2. This can be of the type used to trigger airbags. The accelerometers 20 on the beams 2 are coupled to a control unit, e.g. a microprocessor 21, to which the electrically activated detonators 22 for the explosive charges 10 are also connected. The control unit 21 is programmed to control the triggering of the explosive charges on the respective beam sequentially, as is shown in Figs. 3a-3d, depending on the signals from the accelerometers 20.

The control unit 21 is in a preferred embodiment disposed to compare the signals from the accelerometers 20 with each other and to activate the detonators 22 in accordance with a pattern dependent on the differential signal. For example, the control unit 21 can be programmed to trigger the explosive charges 10 of both beams 2 simultaneously at a certain moment, if the differential signal drops below a certain predetermined value indicating a relatively symmetrical frontal collision, where both beams 2 are to be employed at the same time for energy absorption. If the differential signal is large, indicating a so-called offset collision, the beam 2 on the impact side during the collision must absorb greater force and more energy and therefore, depending on the crash sequence, it can be advantageous to not trigger the explosive charges at all or to trigger them at another point in time than for symmetrical frontal collision. This presupposes that the beams 2 are optimized for offset collision, which means that weakening of the beams will be necessary in symmetrical collision, in order to be able to optimally exploit the entire available deformation distance.

In the embodiment shown in Figs. 4-6, the U-profiles 3 of the beams 2 are joined together by means of rivets 30, of which some are provided with explosive charges 10. Weakening of the beams 2 is in this case achieved by exploding off these rivets 30 and thus breaking the joint between the U-profiles 3 at selected locations along the beam, as shown in Figs. 6a-6d.

The invention has been described above with reference to examples in which the explosive charges 10 are applied directly to the beams 2. Other variants are of course also conceivable. For example, some form of gas generator arrangement can be used, which in a collision creates an over-pressure in cavities in the beam segments which will then rupture or be deformed in such a manner that the required weakening is achieved.

## Claims

1. Frontal structure in a vehicle, comprising a pair of laterally spaced beams, each comprising a sheet metal box element having greater length than both width and height, and having a portion which is oriented in the longitudinal direc-tion of the vehicle, as well as means comprising explosive charges (10), accelerometers (20), a control unit (21) and activators (22) for sensing the retardation of the vehicle during a collision and, as a function thereof, changing the rigidity of the beam in its longitudinal direction, **characterized in that** said means (10,20,21,22) are arranged to suddenly controllably reduce the rigidity of the beam (2) in its longitudinal direction.

2. Frontal structure according to Claim 1, **characterized in that** said means comprise explosives (10), which upon detonation are disposed to reduce the rigidity of the beam (2) in its longitudinal direction.

3. Frontal structure according to Claim 1 or 2, **characterized in that** said means comprise explosives (10) fixed to the beam (2), a control unit (21), a retardation sensor (20), which is disposed to provide a signal dependent on the retardation to the control unit, and an activation device (22) controlled by the control unit, by means of which the explosives can be caused to detonate.

4. Frontal structure according to Claim 3, **characterized in that** the explosives comprise explosive charges (10) spaced sequentially in a longitudinal direction of the beam (2), and that the control unit (21) is disposed to cause the explosive charges to detonate sequentially in the deformation direction of the beam.

5. Frontal structure according to one of Claims 2-4, **characterized in that** the explosives (10) are arranged upon detonation to dent the beam metal.

6. Frontal structure according to one of Claims 1-4, **characterized in that** the beam (2) consists of at least two sheet metal profiles (3) joined to each other by means of fastener elements (30) and that the explosives (10) are arranged upon detonation to break the joint between the profiles.

7. Frontal structure according to Claim 6, **characterized in that** the fastener elements are rivets (30) and that the explosives (10) are arranged upon detonation to blast free at least certain rivets.

8. Frontal structure according to one of Claims 3-7, **characterized in that** the beams (2) are each coordinated with an individual retardation sensor (20) and an activation device (22), and that the control unit (21) is disposed during a collision to compare the signals from each retardation sensor with each other and send signals to the respective activation device to trigger the explosive (10) only if the difference is less than a predetermined lowest value.

## Patentansprüche

1. Fahrzeugwagenvorderbau, umfassend ein Paar von seitlich beabstandeten Trägern, wobei jeder ein Blechelement hat, das eine größere Länge als sowohl Breite als auch Höhe hat, und einen Bereich hat, der in der Längsrichtung des Fahrzeugs ausgerichtet ist, ebenso wie eine Einrichtung, die explosive Chargen (10), Beschleunigungsmessgeräte (20), eine Steuereinheit (21) und eine Aktivierungseinrichtung (22) hat, zum Erfassen der Verzögerung des Fahrzeugs während einer Kollision und zum Verändern der Steifigkeit des Trägers in seiner Längsrichtung als Funktion davon, **dadurch gekennzeichnet, dass** die Einrichtungen (10, 20, 21, 22) so angeordnet sind, dass sie steuerbar die Steifigkeit des Trägers (2) in seiner Längsrichtung plötzlich verringern.

2. Vorderbau nach Anspruch 1, **dadurch gekennzeichnet, dass** die Einrichtung Explosivstoffe (10) umfasst, die bei der Detonation so angeordnet sind, dass sie die Steifigkeit des Trägers (2) in seiner Längsrichtung verringern.

3. Vorderbau nach Anspruch 1 oder 2, **dadurch gekennzeichnet, dass** die Einrichtung Explosivstoffe (10) umfasst, die an dem Träger (2) befestigt sind, eine Steuereinheit (21), einen Verzögerungssensor (20), der abhängig von der Verzögerung ein Signal an die Steuereinheit vorsteht, und eine Aktivierungseinrichtung (22), die durch die Steuereinheit gesteuert wird, durch die die Explosivstoffe zur Detonation gebracht werden können.

4. Vorderbau nach Anspruch 3, **dadurch gekennzeichnet, dass** die Explosivstoffe explosive Chargen (10) umfassen, die sequentiell in einer Längsrichtung des Trägers (2) beabstandet angeordnet sind, und dass die Steuereinheit (21) eine Detonation der Chargen sequentiell in der Deformationsrichtung des Trägers bewirkt.

5. Vorderbau nach einem der Ansprüche 2 bis 4, **dadurch gekennzeichnet, dass** die Explosivstoffe (10) so angeordnet sind, dass sie bei der Detonation das Trägermetall verzahnen.

6. Vorderbau nach einem der Ansprüche 1 bis 4, **dadurch gekennzeichnet, dass** der Träger (2) aus mindestens zwei Blechprofilen (3) besteht, die miteinander durch Befestigungselemente (30) verbunden sind, und dass die Explosivstoffe (10) so angeordnet sind, dass sie bei der Detonation die Verbindung zwischen den Profilen aufbrechen.

7. Vorderbau nach Anspruch 6, **dadurch gekennzeichnet, dass** die Befestigungselemente Nieten (30) sind und dass die Explosivstoffe (10) so angeordnet sind, dass sie bei der Detonation mindestens bestimmte Nieten loslösen.

8. Vorderbau nach einem der Ansprüche 3 bis 7, **dadurch gekennzeichnet, dass** die Träger (2) jeweils mit einem individuellen Verzögerungssensor (20) und einer Aktivierungseinrichtung (22) koordiniert sind und dass die Steuereinheit (21) während einer Kollision die Signale jedes Verzögerungssensors miteinander vergleicht und Signale an die jeweilige Aktivierungseinrichtung sendet, um den Explosivstoff (10) nur dann auszulösen, wenn der Unterschied weniger als ein vorbestimmter geringster Wert ist.

## Revendications

1. Structure frontale d'un véhicule, comprenant une paire de poutrelles écartées latéralement, chacune d'elles possédant un élément boîtier en tôle, de longueur supérieure à la largeur et à la hauteur, et possédant une partie orientée dans la direction longitudinale du véhicule, ainsi que des moyens comprenant des charges explosives (10), des accéléromètres (20), un organe de commande (21) et des actionneurs (22), destinés à détecter le ralentissement du véhicule lors d'une collision et, en fonction de celui-ci, à changer la rigidité de la poutrelle dans sa direction longitudinale, **caractérisée en ce que** les dits moyens (10, 20, 21, 22) sont prévus pour faire diminuer de manière soudaine et contrôlée la rigidité de la poutrelle (2) dans sa direction longitudinale.

2. Structure frontale selon la revendication 1, **caractérisée en ce que** les dits moyens comprennent des explosifs (10) qui lors de leur explosion permettent de diminuer la rigidité de la poutrelle (2) dans sa direction longitudinale.

3. Structure frontale selon la revendication 1 ou 2, **caractérisée en ce que** les dits moyens comprennent des explosifs (10) fixés à la poutrelle (2), un organe de commande (21), un détecteur de ralentissement (20) qui est prévu pour fournir à l'organe de commande un signal qui dépend du ralentissement, et un dispositif d'activation (22) commandé par l'organe de commande et au moyen duquel on peut faire sauter les explosifs.

4. Structure frontale selon la revendication 3, **caractérisée en ce que** les explosifs comprennent des charges explosives (10) réparties séquentiellement dans une direction longitudinale de la poutrelle (2) et **en ce que** l'organe de commande (21) est prévu pour faire sauter les charges explosives séquentiellement en suivant la direction de la déformation de la poutrelle.

5. Structure frontale selon une des revendications 2 à 4, **caractérisée en ce que** les explosifs (10) sont prévus pour déformer le métal de la poutrelle lors de l'explosion.

6. Structure frontale selon une des revendications 1 à 4, **caractérisée en ce que** la poutrelle (2) est composée d'au moins deux profilés (3) en tôle métallique reliés l'un à l'autre par des éléments de fixation (30) et **en ce que** les explosifs (10) sont prévus pour rompre la liaison entre les profilés lors de l'explosion.

7. Structure frontale selon la revendication 6, **caractérisée en ce que** les éléments de fixation sont des rivets (30) et **en ce que** les explosifs (10) sont prévus pour sauter en libérant au moins certains rivets.

8. Structure frontale selon une des revendications 3 à 7, **caractérisée en ce que** chacune des poutrelles (2) est accordée à un détecteur individuel de ralentissement (20) et à un dispositif d'activation (22), et **en ce que** l'organe de commande (21) est prévu pour comparer entre eux les signaux émis par chaque détecteur de ralentissement pendant une collision et transmettre des signaux au dispositif d'activation correspondant pour ne déclencher l'explosif (10) que si la différence est inférieure à une valeur minimale prédéterminée
